# EUROPEAN PATENT SPECIFICATION

(11) **EP 3 992 624 B1**
(45) Date of publication and mention of the grant of the patent: **10.05.2023**
(21) Application number: 20833242.9
(22) Date of filing: 02.03.2020
(51) Int. Cl.: G01N 27/62, G01N 1/28, G01N 1/06, G01N 1/42

(54) **IMAGING SAMPLE FOR MASS SPECTROMETER AND METHOD FOR PRODUCING SAME**
ABBILDUNGSPROBE FÜR MASSENSPEKTROMETER UND VERFAHREN ZUR HERSTELLUNG DAVON
ÉCHANTILLON D'IMAGERIE POUR SPECTROMÈTRE DE MASSE ET SON PROCÉDÉ DE PRODUCTION

(30) Priority: 28.06.2019 JP 2019121981
(43) Date of publication of application: 04.05.2022
(73) Proprietor: Asahi Kasei Kabushiki Kaisha, Tokyo 100-0006 (JP)
(72) Inventor: YAMAMOTO, Toyohiko, Tokyo 100-0006 (JP)
(74) Representative: Strehl Schübel-Hopf & Partner
(86) International application number: PCT/JP2020/008764
(87) International publication number: WO 2020/261651

(56) References cited:
- JP-A- 2003 240 755
- JP-A- 2004 037 434
- JP-B2- 5 705 094
- YOSHIMURA YUKIHIRO ET AL: "Significant advancement of mass spectrometry imaging for food chemistry", FOOD CHEMISTRY, ELSEVIER LTD, NL, vol. 210, 23 April 2016 (2016-04-23), pages 200-211, XP029541683, ISSN: 0308-8146, DOI: 10.1016/J.FOODCHEM.2016.04.096
- NAOKO GOTO-INOUE ET AL: "Imaging mass spectrometry for lipidomics", BIOCHIMICA ET BIOPHYSICA ACTA (BBA) - MOLECULAR AND CELL BIOLOGY OF LIPIDS, ELSEVIER, AMSTERDAM, NL, vol. 1811, no. 11, 16 March 2011 (2011-03-16), pages 961-969, XP028330055, ISSN: 1388-1981, DOI: 10.1016/J.BBALIP.2011.03.004 [retrieved on 2011-03-24]
- SAIGUSA et al.: "Conductive Adhesive Film Expands the Utility of Matrix- Assisted Laser Desorption/Ionization Mass Spectrometry Imaging", analytical chemistry, vol. 91, no. 14, 18 June 2019 (2019-06-18) , pages 8979-8986, XP055778184,

## Description

### FIELD

The present invention relates to a sliced biological tissue sample having a biological tissue attached to a conductive adhesive film. More specifically, the present invention relates to a sliced sample of a biological tissue (for example, an unfixed non-decalcified hard tissue, a whole body of a laboratory animal, or a plant sample) which can be used in life science studies (for example, a histological study, a histochemical study, an enzyme histochemical study, an immunohistochemical study, a genetic histochemical study, a biodistribution study of water-soluble substances, a biochemical analysis of microregions, or a pharmacokinetic study) via imaging with a mass spectrometer, and a method for producing the sample.

### BACKGROUND

In life science studies via imaging with a mass spectrometer, thin frozen sections (for example, a thickness of 5 µm to 30 µm) prepared from hard tissue or a large biological sample (tissue) without undergoing fixation treatment or decalcification treatment with chemical agents (hereinafter, referred to as unfixed non-decalcified) are necessary. For example, the following NPL 1 and 2 disclose a method for obtaining a frozen section from a frozen biological sample to prepare an imaging sample for a mass spectrometer.

### [CITATION LIST]

### [NON-PATENT LITERATURE]

[NPL 1] Histochemistry and Cytochemistry 2005, edited by Japan Society of Histochemistry and Cytochemistry, pp. 95-107 (2005).
[NPL 2] Biointerphases 13(3), May/June 2018, 03B414-1 - 03B414-7

### SUMMARY

### [TECHNICAL PROBLEM]

In conventional methods for sectioning a frozen biological tissue, a non-conductive adhesive plastic film is used, or a section is prepared using the non-conductive adhesive film followed by physical or chemical treatment to prepare an imaging sample for a mass spectrometer. Thus, it was not possible to eliminate effects of reduced sensitivity, retention of *in vivo* substances, changes in tissue shape, and another physical destruction or chemical contamination.

In conventional methods for freezing and slicing a biological tissue, the freezing and slicing are carried out at a sample temperature of, for example, -20 °C so as not to affect the retention of *in vivo* substances or the storage state such as tissue shape. In order to support a thin frozen section of an unfixed non-decalcified sample, a non-conductive plastic film is used, as described above. Consequently, there is a problem with imaging using a mass spectrometer, where electric charge accumulates in the sample and sensitivity is thus significantly reduced.

In order to maintain the sensitivity in imaging using a mass spectrometer, for the purpose of preventing charge accumulation in a frozen section on the non-conductive plastic film, transferring a sample onto a conductive backing using a physical or chemical technique has been examined. For example, there is a method of transferring a frozen sliced biological tissue to a conductive substrate, such as an ITO glass substrate, with a brush. Even with this method, a surface of a biological tissue can be damaged by the use of a brush. Particularly in the case of a large biological tissue, tearing may occur. The problem in which the effects on the retention of *in vivo* substances and the storage state such as tissue shape cannot be eliminated remains.

As described above, in conventional methods for preparing an imaging sample for a mass spectrometer, it is not possible to prepare a thin frozen sectioned (for example, a thickness of 5 µm to 30 µm) sample, in which sensitivity can be maintained and the effects on the retention of *in vivo* substances and the storage state such as tissue shape are eliminated, from an unfixed non-decalcified hard tissue or a large biological sample (for example, a slice surface of 4 cm × 5 cm in size).

In view of the problems of the prior art, an object of the present invention is to provide a sliced biological tissue sample for imaging with a mass spectrometer, capable of eliminating physical or chemical effects and adhesively supporting a thin frozen section of hard tissue or large biological tissue even at low temperature, and a method for producing the sample.

### [SOLUTION TO PROBLEM]

The present inventors have intensively studied and experimented so as to achieve the above object. As a result, the present inventors have unexpectedly discovered that the above object can be achieved by fixing a frozen biological tissue (for example, an unfixed non-decalcified hard tissue, a whole body of a laboratory animal, or a plant sample) to a freezing-slicing apparatus, attaching a thin film (hereinafter referred to as a conductive adhesive film) coated with a conductive adhesive which has adhesiveness even at low temperature to a predetermined surface of the fixed frozen biological tissue, and slicing the frozen biological tissue attached with the conductive adhesive film to a predetermined thickness with a blade.

The present invention relates to a sliced biological tissue sample having a biological tissue attached to a conductive adhesive film, wherein an electrical resistance between two points separated by 75 mm or more on a surface of the conductive adhesive film to which the biological tissue is attached is 1.0 × 10⁻² Ω to less than 2.0 × 10⁷ Ω, and wherein a median value of a temperature range in which an adhesive of the conductive adhesive film exhibits glass transition in DSC measurement is -150 °C to -40 °C.

In another aspect the present invention relates to a method for producing the sliced biological tissue sample comprising the following steps:
freezing a biological tissue to obtain a frozen biological tissue;
attaching a conductive adhesive film to the frozen biological tissue; and
slicing the frozen biological tissue attached to the conductive adhesive film to a predetermined thickness at -35 °C to -10 °C.

### [ADVANTAGEOUS EFFECTS OF INVENTION]

According to the present invention, a frozen section having a thickness of 5 µm to 30 µm, in which the effects of reduced sensitivity, retantion of *in vivo* substances, changes in tissue shape, and another physical destruction or chemical contamination are eliminated, can be easily and reliably prepared from hard tissue or a large biological tissue (for example, a sample having a slice surface of 4 cm × 5 cm in size) without undergoing decalcification treatment or fixation treatment with chemical agents, and can then be used as an imaging sample for a mass spectrometer.

In an imaging sample or a substrate-mounted imaging sample prepared with the sliced biological tissue sample of the present invention, the cut surface of the biological tissue can be used as-is for measurement, and the sharpness of an image is increased by the retention of *in vivo* substances and the prevention of charge accumulation. Further, in the method for producing the sliced biological tissue sample of the present invention, since the adhesiveness is maintained even at low temperature between the biological tissue and the conductive adhesive film, physical destruction such as changes in tissue shape is eliminated. Thus, a series of biological tissue sections, for example, 30 or more sections per mouse, can be easily prepared, and sample preparation efficiency is remarkably improved.

### BRIEF DESCRIPTION OF DRAWINGS

FIG. 1 is a cross-sectional drawing of the conductive adhesive film of the present embodiment.
FIG. 2 is a cross-sectional drawing that shows an embodiment in which the conductive adhesive film is attached to a predetermined surface of a frozen embedded block as a frozen biological tissue.
FIG. 3 is a cross-sectional drawing that shows the relationship between a frozen section and the conductive adhesive film during slicing.
FIG. 4 is a cross-sectional drawing that shows an embodiment in which a section to be attached to the conductive adhesive film is affixed to a substrate.
FIG. 5 is an image of an imaging sample obtained in Example 1.
FIG. 6 is an image of an imaging sample attached to a substrate, obtained in Example 1.

### DESCRIPTION OF EMBODIMENTS

Hereinafter, embodiments for carrying out the present invention will be described in detail. The present invention is not limited to the following embodiments. In the present disclosure, the same numerals referencing the drawings are intended for elements having a similar structure and/or function. When "to" is used to indicate a numerical range in the present embodiment, the numerical values specified before and after "to" are encompassed in the numerical range.

One embodiment of the present invention is a sliced biological tissue sample having a biological tissue attached to a conductive adhesive film, wherein an electrical resistance between two points separated by 75 mm or more on a surface of the conductive adhesive film to which the biological tissue is attached (hereinafter simply referred to as electrical resistance) is 1.0 × 10⁻² Ω to less than 2.0 × 10⁷ Ω, and wherein a median value of a temperature range in which an adhesive of the conductive adhesive film exhibits glass transition in DSC measurement (hereinafter, simply referred to as glass transition point) is -150 °C to -40 °C.

The biological tissue is preferably embedded with a water-soluble embedding agent.

The adhesive of the conductive adhesive film is preferably an acrylic-based adhesive or a silicone-based adhesive, more preferably a silicone-based adhesive.

The sliced biological tissue sample may be in a frozen state at -35 °C to -10 °C or in a normal temperature state at 10 °C to 30 °C. The sliced biological tissue sample can be in a dry state as well.

Another embodiment of the present invention is a method for producing the sliced biological tissue sample, comprising the following steps:
freezing a biological tissue to obtain a frozen biological tissue;
attaching the conductive adhesive film to the frozen biological tissue; and
slicing the frozen biological tissue attached to the conductive adhesive film to a predetermined thickness at -35 °C to -10 °C.

The method for producing the sliced biological tissue sample can include embedding the biological tissue with a water-soluble embedding agent, preferably before freezing. The method for producing the sliced biological tissue sample can also include: temperature adjustment of adjusting the obtained sliced biological tissue sample to 10 °C to 30 °C; and/or drying the obtained frozen sliced biological tissue sample.

From the viewpoint of preventing static charge in a sample, the conductive adhesive film has a conductivity with an electrical resistance of 1.0 × 10⁻² Ω to less than 2.0 × 10⁷ Ω between two points separated by 75 mm or more at least on a surface of the side in contact with the frozen biological tissue. In a preferred embodiment, the conductive adhesive film has conductivity as a whole (for example, when the conductive adhesive film comprises an adhesive and a backing, both the adhesive and the backing are conductive). When the substrate is used with the conductive adhesive film attached thereto, the conductive adhesive also has conductivity to the substrate side.

The slicing of a frozen biological tissue is usually carried out below freezing, specifically at low temperature of -35 °C to -10 °C. In the method of the present embodiment, the conductive adhesive film is preferably arranged with an embedded biological tissue at low temperature, such that it is necessary for the conductive adhesive film to have adhesiveness (adhesion) at low temperature. The adhesion between the frozen biological tissue and the conductive adhesive film is often affected by the glass transition point of the conductive adhesive film. At a temperature lower than the glass transition point, a rubbery state, which exhibits adhesiveness, transitions to a glassy state, and adhesiveness may be reduced significantly. Thus, from the viewpoint of adhesiveness to biological tissue, at least the glass transition point of the conductive adhesive film in contact with the frozen biological tissue must be -150 °C to -40 °C.

Hereinafter, the method for producing the sliced biological tissue sample of the present embodiment will be described.

As described above, another embodiment of the present invention is a method for producing the sliced biological tissue sample, comprising the following steps:
freezing a biological tissue to obtain a frozen biological tissue;
attaching a conductive adhesive film to the frozen biological tissue; and
slicing the frozen biological tissue attached to the conductive adhesive film to a predetermined thickness at -35 °C to -10 °C.

### (Freezing)

Freezing is a step in which a biological tissue (sample) is frozen to obtain a frozen biological tissue.

In the present specification, the term "biological tissue (sample)" is not particularly limited and encompasses hard tissue and a whole body of a laboratory animal, liver, kidney, skin, plant, and fruit. Examples of a laboratory animal include a mouse, a rat, a guinea pig, a hamster, and a rabbit.

More specifically, a frozen biological tissue can be prepared by cooling the biological tissue. The freezing temperature is not particularly limited as long as the biological tissue is frozen. The freezing treatment time is also not particularly limited. For example, the biological tissue can undergo a freezing treatment in acetone inside a container cooled with dry ice, in a temperature of -70 °C or lower for about 30 minutes. The freezing treatment may end when the biological tissue is visually checked and confirmed to be frozen.

The material of the container is not particularly limited as long as the sliced biological tissue sample or the analysis, such as mass spectrometry, using the sliced biological tissue sample is not affected, or the container does not become damaged or leak through the freezing. A known container can be used. As the container, for example, a stainless steel container, a glass container, a container using a polymer material, or a bag using a polymer material can be appropriately selected and used.

The method for cooling the biological tissue is also not particularly limited as long as the conditions for freezing the biological tissue can be achieved. For example, a method for cooling the container containing the biological tissue with a freezer or a method of immersing in a solvent cooled by a circulating freezer or a low temperature body such as dry ice, liquid nitrogen, or liquid propane can be adopted.

### (Embedding)

Before freezing, embedding the biological tissue with a water-soluble embedding agent may be included.

As the water-soluble embedding agent, a conventionally known embedding agent can be used, for example, a 3% by mass to 5% by mass carboxymethyl cellulose aqueous solution, an OCT compound, or a gelatin. The embedded biological tissue is typically an embedded block, and can be prepared by a conventionally known method (for example, in case of a mouse, a method in which hair is sheared off, embedded in a 4% by mass carboxymethyl cellulose solution, and freeze-treated in dry ice/acetone at a temperature of -70 °C or lower for about 30 minutes).

More specifically, a frozen embedded biological tissue can be prepared by placing the biological tissue and the water-soluble embedding agent inside a container and cooling the embedded biological tissue. The embedding may be carried out in atmospheric air or in an inert gas atmosphere. The embedding temperature is not particularly limited as long as the biological tissue and the water-soluble embedding agent are frozen. The freezing treatment time is also not particularly limited. The freezing treatment may end when the biological tissue and the water-soluble embedding agent are visually checked and confirmed to be frozen.

The amount of the water-soluble embedding agent to be used is not particularly limited as long as the site of the biological tissue for which a frozen sliced biological tissue sample is to be prepared is immersed in the water-soluble embedding agent contained in the container. Preferably, the amount of the water-soluble embedding agent to be used can be determined so as to have a frozen layer of the water-soluble embedding agent having a thickness of about 5 mm to 10 mm around the site of the biological tissue for which the sliced biological tissue sample is to be prepared. The capacity and shape of the container to be used can be appropriately selected according to the biological tissue.

The material of the container is not particularly limited as long as the elution of the water-soluble embedding agent, the sliced biological tissue sample, or the analysis such as mass spectrometry using the sliced biological tissue sample is not affected, or the container does not become damaged or leak through the embedding. A container of a known material can be used, similar to those indicated for the freezing.

The method for cooling the biological tissue and water-soluble embedding agent is not particularly limited as long as the conditions for freezing the biological tissue and water-soluble embedding agent can be achieved. A method similar to those indicated for the freezing can be adopted.

### (Attaching)

Attaching is a step in which the conductive adhesive film is attached to a frozen biological tissue. When embedding is carried out before freezing, the frozen biological tissue becomes a frozen embedded biological tissue. In the following description, an embodiment using a frozen embedded biological tissue as the frozen biological tissue will be described. In this case, a frozen biological tissue may be read as a frozen embedded biological tissue.

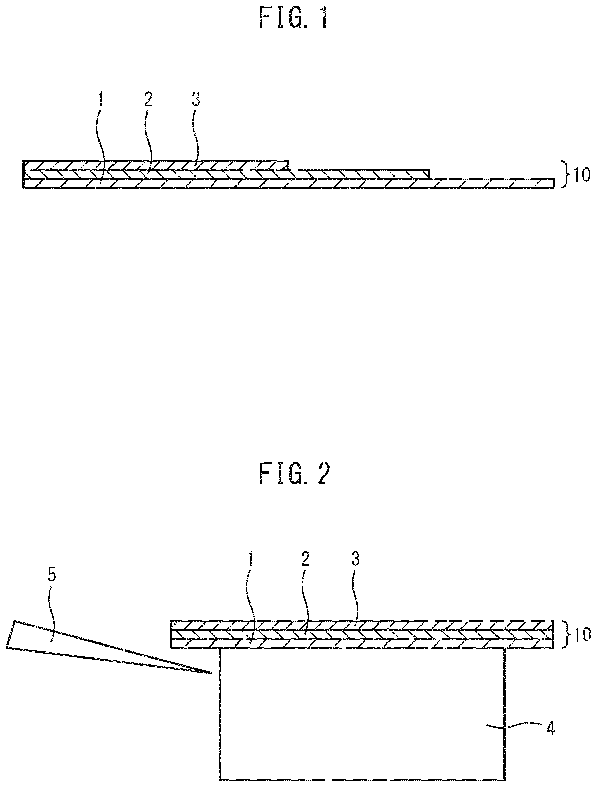

FIG. 1 shows an example of the conductive adhesive film. With reference to FIG. 1, in a preferred embodiment, a conductive adhesive film 10 may comprise or consist only of a first adhesive 1; may comprise or consist only of a backing 2 and the first adhesive 1 having conductivity arranged on a first surface of the backing 2; may comprise or consist only of the first adhesive 1 having conductivity and a second adhesive 3 having or not having conductivity; or may comprise or consist only of the backing 2, the first adhesive 1 having conductivity arranged on the first surface of the backing 2, and the second adhesive 3 having or not having conductivity arranged on a second surface of the backing 2. The first adhesive 1 and the second adhesive 3 may be the same or different adhesives.

The backing may be either a conductive material or a non-conductive material. In a preferred embodiment, the backing is selected from the group consisting of a metal foil, a plastic (conductive plastic or non-conductive plastic), and a fiber (conductive fiber or non-conductive fiber). Examples of the metal foil include aluminum foil and copper foil. Examples of the plastic include a polyolefin (for example, polypropylene), a vinyl resin (for example, polyvinyl chloride), and a polyester (for example, PET). Examples of the fiber include a nonwoven fabric. From the viewpoint of obtaining good mechanical strength and flexibility as a support of a sliced sample, the thickness of the backing is preferably 0.1 µm to 200 µm, more preferably 5 µm to 150 µm, or even more preferably 25 µm to 75 µm.

From the viewpoint of preventing static charge in a sample, the first adhesive is conductive. In terms of conductivity, the electrical resistance between two points separated by 75 mm or more is preferably 1.0 × 10⁻² Ω to less than 2.0 × 10⁷ Ω. More preferably, the electrical resistance between two points separated by 75 mm or more is 1.0 × 10⁻² Ω to 1.0 × 10³ Ω. Further, the distance between the two points where the electrical resistance is measured is preferably 75 mm to 100 mm, more preferably 75 mm. When the electrical resistance cannot be measured at a spacing of 75 mm, the measurable electrical resistance (in the unit of Ω) between two points may be divided by the distance (in the unit of mm) between the two points and then multiplied by 75 to calculate the value.

The measuring device for the electrical resistance of the adhesive film is not particularly limited. The electrical resistance can be measured by a known method, for example, an ohmmeter or a tester. Measurement can be carried out, for example, by separating the terminals of the plus and minus test leads connected to the ohmmeter by 75 mm or more and bringing them into contact with a surface of the conductive adhesive film on the side in contact with the embedded biological sample. Preferably, when measuring the electrical resistance, the adhesive film is placed on a glass plate (for example, a glass slide may be used), and then a weight is set on the adhesive film to carry out the measurement. The weight is about 100 g, has a bottom surface of about 900 mm², and the surface thereof in contact with the adhesive film is made of a material (plastic, glass) having low conductivity.

In a preferred embodiment, the first adhesive comprises a conductive substance and an adhesive polymer. The adhesive polymer of this embodiment may be conductive or non-conductive. Examples of the conductive substance include a powder of a metal (for example, nickel or copper). For the blending amount of the conductive substance, the adhesive may be blended so as to have a preferred electrical resistivity (in the present embodiment, the electrical resistance between two points separated by 75 mm or more is in a preferred range).

In one embodiment, examples of the conductive adhesive polymer include various conductive rubbers, from the viewpoint of obtaining good adhesive strength and flexibility even at low temperature. In another embodiment, the conductive adhesive polymer may be a conductive polymer selected from the group consisting of a conductive acrylic, a conductive silicone, and a conductive urethane (these conductive polymers encompass ones having rubber elasticity and ones not having rubber elasticity at room temperature). Among these, the conductive adhesive polymer is preferably a conductive acrylic or a conductive silicone, more preferably a conductive silicone.

In one embodiment, the non-conductive adhesive polymer may be a rubber or a synthetic polymer, from the viewpoint of obtaining good adhesive strength and flexibility even at low temperature. In another embodiment, the non-conductive adhesive polymer may be a polymer selected from the group consisting of an acrylic, a silicone, and a urethane (these polymers encompass ones having and not having rubber elasticity at room temperature). Among these, the non-conductive adhesive polymer is preferably an acrylic or a silicone, more preferably a silicone. In another preferred embodiment, the first adhesive may be composed of the above adhesive polymer and a conductive substance.

An acrylic-based adhesive refers to an adhesive in which the polymer of the adhesive is an acrylic (including a conductive acrylic), and a silicone-based adhesive refers to an adhesive in which the polymer of the adhesive is a silicone (including a conductive silicone). Although the mechanism is not clear, using a silicone-based adhesive has an effect of increasing signal/noise ratio (S/N ratio) when mass spectrometry is carried out using the sliced biological tissue sample of the present embodiment.

The acrylic-based adhesive is an adhesive polymer in which the main component is a polymer of an acrylic monomer. The structure and polymer composition thereof are not particularly limited, and any composition having the preferred glass transition point can be used as the adhesive of the present embodiment. Generally, an acrylic is a polymer of a methacrylic acid ester and/or an acrylic acid ester. The glass transition point of the polymer can be adjusted by changing the number of carbon atoms and structure of the ester groups or the composition ratio of the methacrylic acid ester and the acrylic acid ester. The degree of polymerization (can be used as, for example, a number average molecular weight and an indicator) of the acrylic can also be appropriately selected. The acrylic-based adhesive may be a copolymer with other monomer components.

The silicone-based adhesive is an adhesive polymer in which the main component is a polysiloxane. The structure and composition thereof are not particularly limited, and any composition having the preferred glass transition point can be used as the adhesive. Generally, a polysiloxane has at least one structure as a repeating unit selected from the group consisting of M(R¹R²R³SiO_{1/2}), D(R⁴R⁵SiO), T(R⁶SiO_{3/2}), and Q(SiO₂), where the R¹, R², R³, R⁴, R⁵, and R⁶ each represent any organic group. The physical properties of the polysiloxane can be changed by changing the substituents on the silicon atom or the composition ratio or degree of polymerization of the substituents.

From the viewpoint of obtaining good flexibility and adhesiveness even at low temperature, the glass transition point of the first adhesive is preferably -150 °C to -40 °C, more preferably - 150 °C to -45 °C, or even more preferably -150 °C to -50 °C.

By using an adhesive having such a glass transition point, the conductive adhesive film can remain attached to the biological sample in the series of steps (attaching and slicing) for preparing a sliced biological tissue sample. The effect of improving work efficiency and the effect of maintaining the shape of the prepared sliced biological tissue sample in good condition are obtained. In terms of setting the lower limit in the preferred range to -150 °C, the measuring lower limit for a DSC measuring device generally used by a person skilled in the art in measuring glass transition point is often -150 °C, and is thus set to -150 °C for convenience. Glass transition points lower than -150 °C are not actively excluded. In other words, an adhesive film having an adhesive with a glass transition point lower than -150 °C can be suitably used.

The glass transition point of the adhesive can be measured by a known method. For example, using a DSC measuring device (differential scanning calorimetry device), the sample is cooled to the lower limit of the measuring range of the device, and then the temperature is raised at a rate of, for example, 3 °C/min. The calorific value change obtained when the temperature is raised is recorded, and the glass transition point can be read from the inflection point of the calorific value change curve. Generally, for the inflection point of the calorific value change curve associated with the glass transition point, two inflection points, on the low temperature side and the high temperature side, are often observed for one glass transition. In the present embodiment, whether the temperature (midpoint) between the inflection point on the high temperature side and the inflection point on the low temperature side corresponds to the temperature range described above or not may be determined. When the inflection point of the calorific value change curve is unclear, the peak of the second derivative curve of the calorific value change curve can be set as the temperature of the inflection point of the calorific value change curve associated with the glass transition point. If it is difficult to cool the sample to the lower limit of the measuring range of the device, the measurement may be carried out in a range in which the sample can be easily cooled.

When the adhesive exhibits adhesiveness at room temperature (for example, 10 °C) and a glass transition point is not observed after the temperature raising process is carried out up to room temperature (for example, 10 °C) or higher, the glass transition point of the adhesive can be presumed to be below the measuring range of the DSC device used for the measurement. Although the present embodiment indicates the preferred range of the glass transition point of the adhesive, when measuring the glass transition point of the adhesive, the conductive adhesive film itself may be used as a sample to carry out the measurement. When the backing of the conductive adhesive film has a glass transition point in the above measuring range, the backing from which the adhesive is removed is prepared by a known method such as a method of peeling off the adhesive or a method of wiping the adhesive off with a solvent. The glass transition point of the adhesive layer can be found from a comparison between the DSC measurement result of the backing and the DSC measurement result of the adhesive film.

FIG. 2 is a cross-sectional drawing that shows an embodiment in which the conductive adhesive film is attached to a predetermined surface of a frozen embedded block as a frozen embedded biological tissue. The conductive adhesive film 10 is attached to the frozen embedded biological sample 4 by the first adhesive 1.

In the attaching, the conductive adhesive film is attached to the desired surface of the biological sample embedded with a water-soluble embedding agent.

The temperature at which the attaching is carried out is not particularly limited as long as the frozen embedded state of the biological sample is maintained, the adhesive of the conductive adhesive film preferably used in the present embodiment has adhesiveness, and the conductive adhesive film is attached to the biological sample. Preferably, the attaching is carried out under the same temperature conditions as the slicing thereafter. Specifically, the temperature is preferably -35 °C or higher, more preferably -30 °C or higher, and even more preferably -25 °C or higher, and is preferably -10 °C or lower, more preferably -15 °C or lower, and even more preferably -20 °C or lower. It is preferable that the biological sample and conductive adhesive tape embedded with the water-soluble embedding agent be adjusted preliminarily to the temperature at which the attaching is carried out.

In a preferred embodiment, the conductive adhesive film is attached to a frozen embedded biological sample such that the frozen embedded biological sample is fixed to a sample stage of the biological tissue slicing apparatus. The conductive adhesive film may be pressed against the biological sample using a jig such as a trowel to increase the degree of attachment of the conductive adhesive film to the biological sample. In such case, it is preferable that the sample stage and the jig such as a trowel be adjusted preliminarily to the temperature at which the slicing is carried out.

Preferably, the surface of the biological sample to be attached to the conductive adhesive film is preliminarily planarized. More preferably, the surface of the biological sample to be attached to the conductive adhesive film is preliminarily pared using a blade, such as a microtome, to be planarized. It is preferable that the blade such as a microtome used in such case be adjusted preliminarily to the temperature at which the process is carried out. As described below, when a plurality of sliced biological tissue samples are prepared by carrying out the attaching and slicing multiple times, the surface of the biological sample after the slicing is planarized, and thus the conduction adhesive film may be attached as-is.

### (Slicing)

Slicing is a step in which the frozen biological tissue attached to the conductive adhesive film is sliced to a predetermined thickness at -35 °C to -10 °C.

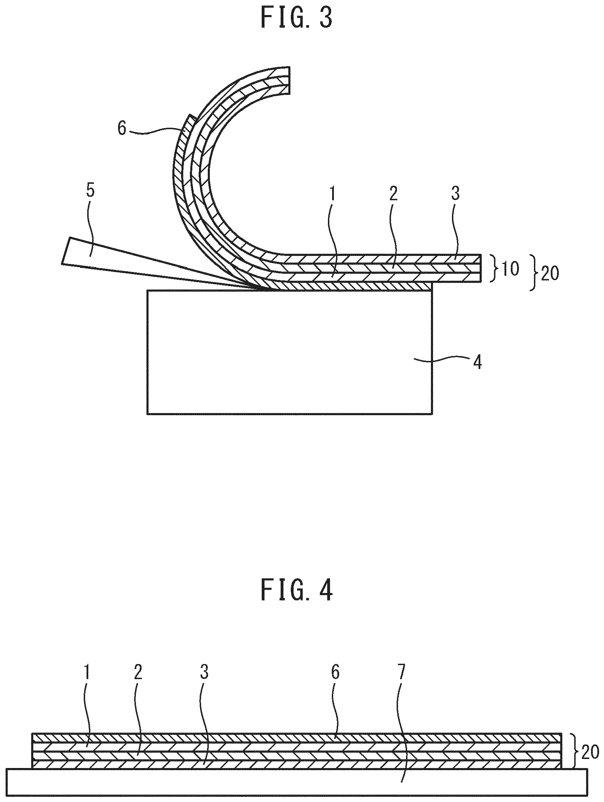

FIG. 3 is a cross-sectional drawing that shows the relationship between a frozen section and the conductive adhesive film during slicing. Referring to FIGS. 2 and 3, the embedded biological sample 4 in a frozen state with the conductive adhesive film 10 is cut with a blade 5 (for example, a blade made of tungsten carbide) to a predetermined thickness (for example, 5 µm to 50 µm, which is a thickness suitable for life science studies via imaging with a mass spectrometer) to prepare an imaging sample 20 comprising the conductive adhesive film 10 and a sliced sample 6 attached to the conductive adhesive film 10.

When slicing the frozen embedded biological sample, the conductive adhesive film also functions as a support for the obtained sliced sample.

When the conductive adhesive film 10 has a second adhesive 3 on a second surface of the backing 2, the second adhesive has a function of fixing the sample to the substrate of a mass spectrometer. At this time, the sample is usually fixed while being stretched without causing wrinkles. Therefore, the backing 2, the first adhesive 1, and the second adhesive 3 are preferably selected so as to have strong adhesive strength as well as good flexibility and pliability at normal temperature. When an adhesive is used separately for fixing the substrate and the sample, it is not necessary for the conductive adhesive film to comprise a second adhesive.

In one embodiment, the second adhesive may be a conductive or non-conductive, natural rubber or synthetic rubber, from the viewpoint of obtaining superior adhesive strength and flexibility at normal temperature. In another embodiment, the second adhesive may be one or more polymers selected from the group consisting of a conductive or a non-conductive acrylic, silicone, and urethane (these polymers having rubber elasticity at room temperature). Suitable examples of various rubbers, acrylics, silicones, and urethanes are the same as the ones included as suitable examples of the adhesive polymer in the first adhesive. Examples of the second adhesive that is conductive include the same ones exemplified as the first adhesive. The first adhesive and the second adhesive may be the same.

The temperature at which the slicing is carried out is not particularly limited as long as the frozen embedded state of the biological sample is maintained, and the adhesive of the conductive adhesive film preferably used in the present embodiment has adhesiveness and can maintain the state in which the biological sample and the conductive adhesive film are attached. Preferably, the slicing is carried out under the same temperature conditions as the attaching above. Specifically, the temperature is preferably -35 °C to -10 °C, more preferably -30 °C to -15 °C, or even more preferably -25 °C to -20 °C. It is preferable that the tools such as the blade (for example, blade 5 in FIG. 3) used for the slicing and the sample stage of the biological tissue freezing-slicing apparatus are adjusted preliminarily to the temperature at which the slicing is carried out.

As described above, if the biological sample is too thin or too thick, the ease of slicing and the ease of handling are impaired. The thickness of the biological sample to be sliced in the slicing is preferably 5 µm or greater, more preferably 10 µm or greater, or even more preferably 15 µm or greater, and preferably 50 µm or less, more preferably 30 µm or less, or even more preferably 20 µm or less.

One sliced biological tissue sample can be obtained by carrying the embedding, attaching, and slicing described above once in order. When a plurality of frozen sliced samples are required, the attaching and slicing described above may be carried out multiple times.

### <Method for producing imaging sample>

The sliced biological tissue sample of the present embodiment, for example, can be used for preparing an imaging sample for a mass spectrometer by further comprising the following steps.

### (Drying)

Drying is a step in which the sliced biological tissue sample is dried. The drying can be carried out while freezing the sample obtained in the slicing. The freezer to be used is not particularly limited as long as the sample does not melt. A cryostat, a deep freezer, or a freeze-dryer can be used. The drying may be carried out in atmospheric air or in an inert gas atmosphere, and may be carried out under atmospheric pressure or under reduced pressure.

To increase the drying rate of the sample, a known desiccant, dryer, or blower may be used without exerting changes to the biological sample. A known humidifier may be used to slow down the drying rate of the sample.

The drying may be carried out on the sliced biological tissue sample obtained in the slicing.

The drying may also be provided before temperature adjustment or after temperature adjustment.

### (Temperature adjustment)

Temperature adjustment is a step in which the temperature of the sliced biological tissue sample prepared in the slicing is brought to normal temperature (10 °C to 30 °C) to prepare a sliced biological tissue sample. The normal temperature in the temperature adjustment is not particularly limited as long as the temperature adjustment is carried out in environmental temperature, which is generally 10 °C to 30 °C.

The temperature adjustment can be carried out in a drying environment such that condensation does not occur in the dried frozen sliced biological tissue sample due to temperature change. The drying environment can be carried out under vacuum or by drying with silica gel. The temperature adjustment may be carried out in an inert gas atmosphere. The frozen sliced biological tissue sample may also be placed in a container and heated. When using a container, the container is not particularly limited as long as the container has a sufficient size and shape for carrying out the operation. A stainless steel container, a glass container, a container using a polymer material, or a bag using a polymer material can be appropriately selected. The heating may be carried out with a known heater (a cooler may be added as needed) or by bringing into contact an atmospheric gas (which may be atmospheric air or an inert gas).

When the drying is carried out on the frozen sliced biological tissue sample obtained in the slicing, the temperature adjustment may be carried out as-is.

### <Method for producing substrate-mounted imaging sample>

Another embodiment of the present invention is a method for producing a substrate-mounted imaging sample for a mass spectrometer, comprising the following steps:
steps included in the method for producing the imaging sample of the present embodiment; and
attaching the obtained imaging sample to a conductive or non-conductive substrate to prepare a substrate-mounted imaging sample.

FIG. 4 is a cross-sectional drawing that shows an embodiment in which a section to be attached to the conductive adhesive film is affixed to a substrate. Referring to FIG. 4, an imaging sample 20 having a conductive adhesive film 10 and a sliced sample 6 retained thereon is attached to a substrate 7 via a second adhesive 3.

As the substrate, any conductive substrate (for example, conductive glass, ITO, or metal) and non-conductive substrate (for example, ordinary glass, plastic, or film) can be used. As described above, the desired antistatic effect can be obtained by the conductive adhesive film having conductivity. Thus, it is not essential to use a conductive substrate, which is generally expensive. A non-conductive substrate has an advantage of cost reduction.

According to the above procedure, a frozen section in which the effects on the maintenance of sensitivity and the retention of *in vivo* substances and the effects of changes in tissue shape and another physical destruction or chemical contamination are eliminated can be easily and reliably prepared from a frozen embedded biological sample (for example, an unfixed non-decalcified hard tissue or a whole body of a laboratory animal). The thin frozen section can be used for life science studies via imaging with a mass spectrometer.

### EXAMPLES

The present invention will be specifically described below with reference to Examples and Comparative Examples. However, the present invention is not limited to the Examples.

The measurement and evaluation methods of the physical properties of the conductive adhesive films and samples used in the Examples and Comparative Examples will be described.

### (1) Measurement of glass transition point

Conductive adhesive films were cut to a size of about 4 to 5 mm in diameter, and each thereof was placed in a sample pan. Under the conditions of raising the temperature by 3 °C per minute in the range of -80 °C to 10 °C, a DSC Q2000 (manufactured by TA Instruments Japan Inc.) differential scanning calorimeter (DSC) was used to measure the glass transition point. The glass transition point was evaluated at the midpoint between the inflection point on the low temperature side and the inflection point on the high temperature side.

### (2) Evaluation of sliceability

Rat kidneys were placed in a 4% carboxymethyl cellulose solution (manufactured by Leica Microsystems Inc.) and frozen in liquid nitrogen to prepare frozen embedded biological samples. The frozen embedded biological samples were set in a CM 1860UV (manufactured by Leica Microsystems Inc.) cryostat and set to a sample temperature of -15 °C, -20 °C, or -25 °C. Conductive adhesive films were cut to 10 mm in diameter, and each thereof was attached to an embedded sample surface, which was then sliced three times to slices having a thickness of 20 µm at a blade speed of 10 mm to 20 mm per second. If a conductive adhesive film and an embedded sample peeled during slicing or a rat kidney did not maintain the shape thereof on the conductive adhesive film at least once, the conductive adhesive film was evaluated as "N". If a rat kidney was sectioned on the conductive adhesive film without completely peeling in all three times, the conductive adhesive film was evaluated as "S".

### (3) Measurement of electrical resistance

Each conductive adhesive film was trimmed to the same size as a glass slide (25 mm × 75 mm) and attached to the glass slide such that the adhesive 1 faced upward. The surface of the adhesive 1 was turned to face downward, and the sides of the testers of a CD721 (manufactured by Sanwa Electric Instrument Co., Ltd.) digital multimeter were sufficiently brought into contact with both of the short sides of the conductive adhesive film. A 100 g weight was set on the glass slide, and the electrical resistance was measured at normal temperature. A glass bottle having a bottom surface of about 900 mm² was filled with water to make 100 g and used as the weight.

### (4) Measurements of ion intensity and signal-to-noise ratio

Each conductive adhesive film was placed on a glass slide. A Parapin (manufactured by HAKUAI Co., Ltd.) medicine wrapping paper having a diameter of about 3 mm was soaked in a solution of acetonitrile containing 500 µg/mL celecoxib and dried. The medicine wrapping paper was then attached to the surface of adhesive 1. The surface of the adhesive 1 to which the medicine wrapping paper was attached was sprayed with an aqueous solution of 50% methanol (Kanto Chemical Co., Inc.) containing 30 mg/mL 2,5-dihydroxybenzoic acid (manufactured by Tokyo Chemical Industry Co., Ltd.) and 0.1% trifluoroacetic acid (Wako Pure Chemical Industries, Ltd.) and dried in a vacuum desiccator for 30 minutes. The sample was measured on the medicine wrapping paper using an UltrafleXtreme (Bruker Japan K.K.) time-of-flight mass spectrometer in reflector mode, m/z range of 100 to 1000, and 1000 shots/point. The spectral intensities at m/z 382, which are protonated ions of celecoxib measured at six points, were averaged to measure the ion intensity and signal-to-noise ratio.

### [Example 1]

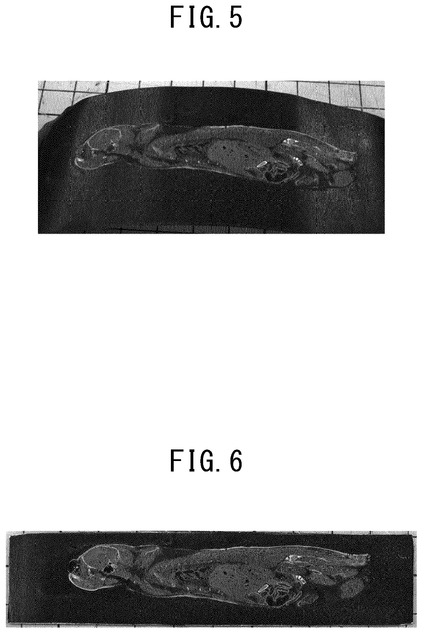

A whole-body mouse sample was placed in a freezing mold, embedded in a 4% by mass carboxymethyl cellulose aqueous solution, and frozen with dry ice/acetone to prepare a frozen embedded block. The frozen embedded block was fixed to a cryo-microtome (manufactured by Leica Microsystems Inc.) set at -20 °C. A tungsten carbide replacement blade was installed on the microtome. The surface of the frozen embedded block was pared away. A conductive silicone-based double-sided adhesive film (a double-sided adhesive film in which a first adhesive and a second adhesive, consisting of a conductive filler and a silicone-based adhesive polymer, are laminated on both sides of a metal foil backing, ESD EMI Engineering Corporation, 2018 catalog, Cat. No. T-9426) as the conductive adhesive film was cooled to -20 °C, and then the release paper on one side (first adhesive side) was peeled. The first adhesive of the conductive adhesive film was attached to the pared-away frozen embedded block surface without causing wrinkles. For good adhesion, the conductive adhesive film was pressed against the frozen embedded block with an adhesion tool such as a cooled trowel. The cryo-microtome was set to a slicing thickness of 20 µm, and from the frozen embedded block with the conductive adhesive film still attached thereto, a whole-body mouse section was sliced off. The whole-body mouse section sample was retained on the conductive adhesive film and dried in a freezer. The exposed surface of the whole-body mouse section was turned to face upward, and the second adhesive side of the conductive adhesive film with the release paper still attached thereto was fixed to a suitable plate. The section was placed in a desiccator and the temperature was adjusted to obtain an imaging sample. FIG. 5 shows an image of the obtained imaging sample.

From the imaging sample thus obtained, the release paper on the second adhesive side of the conductive adhesive film was peeled, and both ends of the conductive adhesive film were attached to a plastic plate (as a substrate) while stretched. At this point, care was taken to retain the whole-body mouse section on the plastic plate. The conductive adhesive film protruding from the plastic plate was trimmed, and a substrate-mounted imaging sample was obtained. FIG. 6 shows an image of the obtained imaging sample attached to a plastic plate as the substrate.

### [Comparative Example 1]

Other than using a Maxell, Ltd., 2019 catalog, Cat. No. 5815 in place of the ESD EMI Engineering Corporation, 2018 catalog, Cat. No. T-9426 as the conductive adhesive film, the imaging sample was prepared in the same manner as in Example 1.

### [Comparative Example 2]

Other than using a Teraoka Seisakusho Co., Ltd., 2016 catalog, Cat. No. 8315 in place of the ESD EMI Engineering Corporation, 2018 catalog, Cat. No. T-9426 as the conductive adhesive film, the imaging sample was prepared in the same manner as in Example 1.

### [Example 2]

Other than using a 3M Japan Limited, 2017 catalog, Cat. No. 1170 in place of the ESD EMI Engineering Corporation, 2018 catalog, Cat. No. T-9426 as the conductive adhesive film, the imaging sample was prepared in the same manner as in Example 1.

### [Example 3]

Other than using a 3M Japan Limited, 2017 catalog, Cat. No. 1181 in place of the ESD EMI Engineering Corporation, 2018 catalog, Cat. No. T-9426 as the conductive adhesive film, the imaging sample was prepared in the same manner as in Example 1.

### [Comparative Example 3]

Other than using a Nisshin-EM, 2016 catalog, Cat. No. 7322 in place of the ESD EMI Engineering Corporation, 2018 catalog, Cat. No. T-9426 as the conductive adhesive film, the imaging sample was prepared in the same manner as in Example 1.

### [Comparative Example 4]

Other than using a 3M Japan Limited, 2019 homepage catalog at https://www.scotch.jp/3M/ja_JP/scotch-brand-jp/, Cat. No. 810 in place of the ESD EMI Engineering Corporation, 2018 catalog, Cat. No. T-9426 as the conductive adhesive film, the imaging sample was prepared in the same manner as in Example 1.

The following Table 1 shows the glass transition temperatures, as well as the sliceability during the preparation of imaging samples, of the conductive adhesive films in the above Examples and Comparative Examples.

**Table 1]**

| Conductive adhesive film | Glass transition point (°C) | Sliceabilitv | | |
|---|---|---|---|---|
| | | -15 °C | -20 °C | -25 °C |
| Example 1 | -80 or lower | S | S | S |
| Comparative Example 1 | -22.6 | N | N | N |
| Comparative Example 2 | -35.3 | S | N | N |
| Example 2 | -42.8 | S | S | S |
| Example 3 | -42.3 | S | S | S |
| Comparative Example 3 | -35.4 | S | N | N |
| Comparative Example 4 | -48.6 | S | S | S |

From Table 1, it was found that in a typical low-temperature environment of -20 °C, the conductive adhesive films having a glass transition point higher than -40 °C had a sliceability of "N", where a section peels from the conductive adhesive film during slicing or the tissue shape is not maintained. Thus, it is shown that the glass transition point of the conductive adhesive film is important in slicing in a low-temperature environment. In a -20 °C environment, at the least, it is necessary for the glass transition point to be -40 °C or lower.

The following Table 2 shows the electrical resistances, ion intensity s, and signal-to-noise ratios of the conductive adhesive films in the above Examples and Comparative Examples.

**Table 2**

| Conductive adhesive film | Resistance (Ω) | Ion Intensity | Signal-to-noise ratio |
|---|---|---|---|
| Example 1 | 1.0 | 3.0 × 10⁴ | 458 |
| Comparative Example 1 | 2.5 | 2.2 × 10⁴ | 175 |
| Comparative Example 2 | 0.1 | 2.9 × 10⁴ | 161 |
| Example 2 | 0.5 | 3.1 × 10⁴ | 186 |
| Example 3 | 0.5 | 2.2 × 10⁴ | 170 |
| Comparative Example 3 | 2.0 × 10⁷ | 5.0 × 10³ | 193 |
| Comparative Example 4 | 3 × 10 or greater | 25 | - |

From Table 2, mass spectrometry generally requires a signal-to-noise ratio of 3 or greater, which requires a certain level of ion intensity (signal) to achieve. It was found that the ion intensity and signal-to-noise ratio are good when the electrical resistance of the conductive adhesive film is less than 2.0 × 10⁷ Ω. Thus, it is shown that the electrical resistance is important in obtaining a good signal-to-noise ratio. At the least, it is necessary for the electrical resistance to be less than 2.0 × 10⁷ Ω.

### INDUSTRIAL APPLICABILITY

According to the present invention, a frozen section having a thickness of 5 µm to 30 µm, in which the effects on the maintenance of sensitivity and the retention of *in vivo* substances and the effects of changes in tissue shape and another physical destruction or chemical contamination are eliminated, can be easily and reliably prepared from hard tissue or a large biological tissue (for example, a sample having a slice surface of 4 cm × 5 cm in size) without undergoing decalcification treatment or fixation treatment with chemical agents, and can then be used as an imaging sample for a mass spectrometer. Further, a thin frozen section prepared by the method of slicing a biological sample according to the present invention can be used in a number of life science studies (for example, a histological study, a histochemical study, an enzyme histochemical study, an immunohistochemical study, a genetic histochemical study, a biodistribution study of water-soluble substances, a biochemical analysis of microregions, or a pharmacokinetic study).

### REFERENCE SIGNS LIST

- 10: conductive adhesive film
- 20: imaging sample
- 1: first adhesive
- 2: backing
- 3: second adhesive
- 4: embedded biological sample
- 5: blade
- 6: sliced sample
- 7: substrate

## Claims

1. A sliced biological tissue sample having a biological tissue attached to a conductive adhesive film, wherein an electrical resistance between two points, separated by 75 mm or more, on a surface of the conductive adhesive film to which the biological tissue is attached is 1.0 × 10⁻² Ω to less than 2.0 × 10⁷ Ω, and wherein a median value of a temperature range in which an adhesive of the conductive adhesive film exhibits glass transition in DSC measurement is -150 °C to -40 °C.

2. The sliced biological tissue sample according to claim 1, wherein the biological tissue is embedded with a water-soluble embedding agent.

3. The sliced biological tissue sample according to claim 1 or 2, wherein the adhesive of the conductive adhesive film is an acrylic-based adhesive or a silicone-based adhesive.

4. The sliced biological tissue sample according to claim 3, wherein the adhesive of the conductive adhesive film is a silicone-based adhesive.

5. The sliced biological tissue sample according to any one of claims 1 to 4, which is at -35 °C to -10 °C.

6. The sliced biological tissue sample according to any one of claims 1 to 4, which is at 10 °C to 30 °C.

7. The sliced biological tissue sample according to any one of claims 1 to 6, which is in a dry state.

8. A method for producing the sliced biological tissue sample according to any one of claims 1 and 3 to 5, comprising the following steps:
freezing a biological tissue to obtain a frozen biological tissue;
attaching a conductive adhesive film to the frozen biological tissue; and
slicing the frozen biological tissue affixed to the conductive adhesive film to a predetermined thickness at -35 °C and -10 °C.

9. A method for producing the sliced biological tissue sample according to claim 2, comprising embedding a biological tissue with a water-soluble embedding agent before the freezing.

10. A method for producing the sliced biological tissue sample according to claim 6, comprising:
temperature adjustment of adjusting a frozen sliced biological tissue sample obtained by the method according to claim 8 or 9 to 10 °C to 30 °C.

11. A method for producing the sliced biological tissue sample according to claim 7, comprising:
drying the frozen sliced biological tissue sample obtained by the method according to claim 8 or 9.

## Patentansprüche

1. Biologische Gewebeschnittprobe mit einem biologischen Gewebe, das an einem leitfähigen Klebstofffilm/einer leitfähigen Klebstofffolie angehaftet ist, wobei ein elektrischer Widerstand zwischen zwei Punkten, die 75 mm oder mehr auf einer Oberfläche des leitfähigen Klebstofffilms/der leitfähigen Klebstofffolie, woran das biologische Gewebe angehaftet ist, voneinander getrennt sind, 1,0 × 10⁻² Ω bis weniger als 2,0 × 10⁷ Ω ist, und wobei ein Mittelwert eines Temperaturbereichs, in dem ein Klebstoff des leitfähigen Klebstofffilms/der leitfähigen Klebstoffolie bei DSC-Messung einen Glasübergang zeigt, -150 °C bis -40 °C beträgt.

2. Biologische Gewebeschnittprobe nach Anspruch 1, wobei das biologische Gewebe mit einem wasserlöslichen Einbettungsmittel eingebettet ist.

3. Biologische Gewebeschnittprobe nach Anspruch 1 oder 2, wobei der Klebstoff des leitfähigen Klebstofffilms/der leitfähigen Klebstofffolie ein Klebstoff auf Acrylatbasis oder ein Klebstoff auf Siliconbasis ist.

4. Biologische Gewebeschnittprobe nach Anspruch 3, wobei der der Klebstoff des leitfähigen Klebstofffilms/der leitfähigen Klebstofffolie ein Klebstoff auf Siliconbasis ist.

5. Biologische Gewebeschnittprobe nach einem der Ansprüche 1 bis 4, welche bei -35 °C bis -10 °C vorliegt.

6. Biologische Gewebeschnittprobe nach einem der Ansprüche 1 bis 4, welche bei 10 °C bis 30 °C vorliegt.

7. Biologische Gewebeschnittprobe nach einem der Ansprüche 1 bis 6, die in einem trockenen Zustand vorliegt.

8. Verfahren zur Herstellung der biologischen Gewebeschnittprobe nach einem der Ansprüche 1 und 3 bis 5, mit folgenden Schritten:
Einfrieren eines biologischen Gewebes, um ein gefrorenes biologisches Gewebe zu erhalten;
Anhaften eines leitfähigen Klebstofffilms/einer leitfähigen Klebstofffolie an dem gefrorenen biologischen Gewebe; und
Schneiden des gefrorenen biologischen Gewebes, das an dem leitfähigen Klebstoffilm/der leitfähigen Klebstofffolie angehaftet ist, in eine vorbestimmte Dicke bei -35 °C und -10 °C.

9. Verfahren zur Herstellung der biologischen Gewebeschnittprobe nach Anspruch 2, umfassend das Einbetten eines biologischen Gewebes mit einem wasserlöslichen Einbettungsmittel vor dem Einfrieren.

10. Verfahren zur Herstellung der biologischen Gewebeschnittprobe nach Anspruch 6, umfassend:
eine Temperatureinstellung, wobei eine durch das Verfahren nach Anspruch 8 oder 9 erhaltene gefrorene biologischen Gewebeschnittprobe auf 10 °C bis 30 °C eingestellt wird.

11. Verfahren zur Herstellung der biologischen Gewebeschnittprobe nach Anspruch 7, umfassend:
Trocknen der durch das Verfahren nach Anspruch 8 oder 9 erhaltenen gefrorenen biologischen Gewebeschnittprobe.

## Revendications

1. Échantillon de tissu biologique en tranche mince comportant un tissu biologique fixé à un film adhésif conducteur, dans lequel une résistance électrique entre deux points, séparés de 75 mm ou plus, sur une surface du film adhésif conducteur auquel le tissu biologique est fixé, est de 1,0 × 10⁻² Ω à moins de 2,0 × 10⁷ Ω, et dans lequel une valeur médiane d'une plage de température dans laquelle un adhésif du film adhésif conducteur présente une transition vitreuse dans une analyse calorimétrique différentielle est de -150 °C à -40 °C.

2. Échantillon de tissu biologique en tranche mince selon la revendication 1, dans lequel le tissu biologique est incorporé avec un agent d'incorporation soluble dans l'eau.

3. Échantillon de tissu biologique en tranche mince selon la revendication 1 ou 2, dans lequel l'adhésif du film adhésif conducteur est un adhésif à base d'acrylique ou un adhésif à base de silicone.

4. Échantillon de tissu biologique en tranche mince selon la revendication 3, dans lequel l'adhésif du film adhésif conducteur est un adhésif à base de silicone.

5. Échantillon de tissu biologique en tranche mince selon l'une quelconque des revendications 1 à 4, qui est à une température de -35 °C à -10 °C.

6. Échantillon de tissu biologique en tranche mince selon l'une quelconque des revendications 1 à 4, qui est à une température de 10 °C à 30 °C.

7. Échantillon de tissu biologique en tranche mince selon l'une quelconque des revendications 1 à 6, qui est dans un état sec.

8. Procédé de production de l'échantillon de tissu biologique en tranche mince selon l'une quelconque des revendications 1 et 3 à 5, comprenant les étapes suivantes :
congélation d'un tissu biologique pour obtenir un tissu biologique congelé ;
fixation d'un film adhésif conducteur au tissu biologique congelé ; et
préparation d'une tranche mince du tissu biologique congelé fixé au film adhésif conducteur à une épaisseur prédéterminée à une température de -35 °C à -10 °C.

9. Procédé de production de l'échantillon de tissu biologique en tranche mince selon la revendication 2, comprenant l'incorporation d'un tissu biologique avec un agent d'incorporation soluble dans l'eau avant la congélation.

10. Procédé de production de l'échantillon de tissu biologique en tranche mince selon la revendication 6, comprenant :
un réglage de température consistant à régler un échantillon de tissu biologique en tranche mince congelé obtenu par le procédé selon la revendication 8 ou 9 à une température de 10 °C à 30 °C.

11. Procédé de production de l'échantillon de tissu biologique en tranche mince selon la revendication 7, comprenant :
le séchage de l'échantillon de tissu biologique en tranche mince congelé obtenu par le procédé selon la revendication 8 ou 9.
